# NEUE EUROPÄISCHE PATENTSCHRIFT

(11) **EP 0 742 762 B2**
(45) Veröffentlichungstag und Bekanntmachung des Hinweises auf die Entscheidung über den Einspruch: **28.01.2004**
(45) Hinweis auf die Patenterteilung: 10.06.1998
(21) Anmeldenummer: 95908215.7
(22) Anmeldetag: 28.01.1995
(51) Int. Cl.: B60J 10/02

(54) **VERFAHREN FÜR DIE HERSTELLUNG UND DEN EINBAU EINER GLASSCHEIBE MIT RAHMEN, INSBESONDERE AN EINEM FAHRZEUGTEIL**
PROCESS FOR PRODUCING AND MOUNTING A GLASS PANE WITH FRAME, IN PARTICULAR ON A VEHICLE PART
PROCEDE DE PRODUCTION ET DE MONTAGE D'UNE VITRE AVEC CADRE, NOTAMMENT DANS UNE PARTIE DE VEHICULE

(30) Priorität: 11.02.1994 DE 4404348
(43) Veröffentlichungstag der Anmeldung: 20.11.1996
(73) Patentinhaber: RICHARD FRITZ GMBH + CO. KG, 74354 Besigheim (DE)
(72) Erfinder: SOLDNER, Karl, D-71554 Weissach i.T. (DE)
(74) Vertreter: Kastner, Hermann, Dipl.-Ing. Patentanwalt
(86) Internationale Anmeldenummer: PCT/EP1995/000303
(87) Internationale Veröffentlichungsnummer: WO 1995/021749

(56) Entgegenhaltungen:
- EP-A- 0 163 194
- EP-A- 0 256 946
- EP-A- 0 258 128
- EP-A- 0 312 496
- EP-A- 0 421 833
- EP-A- 0 537 067
- EP-A- 0 576 179
- EP-A- 0 576 180
- DE-A- 3 323 006
- DE-A- 3 426 355
- DE-A- 3 604 364
- DE-A- 4 034 807
- GB-A- 2 093 106
- JP-U- 8 288 613

## Beschreibung

Glasscheiben, insbesondere von Kraftfahrzeugen, werden häufig mit einer Scheibeneinfassung oder einem Rahmen aus Kunststoff versehen, die bzw. der ein bestimmtes Querschnittsprofil hat, mittels dessen die Scheibe in eine vorbestimmte Öffnung, z.B. der Karosserie, eingesetzt und befestigt wird. Im allgemeinen dient die Scheibeneinfassung oder der Rahmen zugleich auch der Abdichtung der Scheibe gegenüber dem anschließenden Bauteil.

Scheibeneinfassungen dieser Art werden zum Teil im Spritzgußverfahren an der Scheibe unmittelbar angeformt, nachdem zuvor auf der Scheibe ein Haftmittel aufgebracht worden war, um eine bessere Bindung der Glasscheibe mit dem Kunststoff der Scheibeneinfassung zu erreichen. Dieses Anformen geschieht in einer festen Spritzgußform, in der die Scheibe aufgenommen wird. Im Inneren der Spritzgußform sind dort Hohlräume vorhanden, wo der Kunststoff die Scheibeneinfassung bilden soll. Der Kunststoff wird unter hohem Druck in die Spritzgußform eingepreßt, damit er das Querschnittsprofil in allen seinen Verzweigungen zuverlässig ausfüllt.

Solche Spritzgußformen sind sehr kompliziert aufgebaut und dementsprechend sehr teuer. Diese Spritzgußformen unterliegen aus unterschiedlichen Gründen einem starken Verschleiß, so daß zumindest einzelne Teile oder manchmal auch die ganze Form immer wieder überholt werden muß oder im Ganzen ausgetauscht werden muß. Das verursacht weitere Formkosten.

Die Spritzgußform besteht aus Stahl, weshalb sie in Bezug auf die Glasscheibe unnachgiebig ist. Die Glasscheiben selbst werden in einem Warmformverfahren hergestellt, weil sie häufig räumlich gekrümmt sind. Aufgrund der Eigenschaften des Glases und des Herstellungsverfahrens der Scheiben ergibt sich, daß die Scheiben hinsichtlich ihrer Abmessungen und hinsichtlich ihrer Formgenauigkgeit wesentlich größere Toleranzen haben als die Spritzgußform aus Stahl. Bei einem Übermaß der Scheibe, insbesondere hinsichtlich ihrer Dicke oder bei Abweichungen von ihrer Sollform, wird die Scheibe entweder bereits beim Einspannen in der Form oder beim anschließenden Einpressen des Kunststoffes zerbrochen. Die Bruchstücke können als Glaskrümel sehr kleine Abmessungen haben, so daß es schwierig ist, die Bruchstücke vollständig aus der Spritzgußform zu entfernen, ehe die nächste Scheibe eingelegt wird. Vor allem die sehr kleinen Bruchstücke führen zu Beschädigungen der Oberfläche der Spritzgußform oder auch zu Beschädigungen der nächsten Scheibe. Sie können aber auch zu Fehlstellen in der Scheibeneinfassung führen. Bei einem Untermaß der Scheibe, insbesondere hinsichtlich ihrer Dicke, ist damit zu rechnen, daß durch den dann vorhandenen Spalt zwischen der Spritzgußform und der Scheibe der Kunststoff teilweise austritt und Auswüchse oder sogenannte Austriebe entstehen. Diese müssen nachträglich immer dann von Hand entfernt werden, wenn sie sichtbar sind und das Aussehen der Scheibe und ihrer Scheibeneinfassung beeinträchtigen. Dieses Nacharbeiten der Scheiben ist sehr zeitaufwendig, erfordert ein sorgfältig arbeitendes Personal und ist dementsprechend teuer. Außerdem besteht dabei auch die Gefahr, daß beim Entfernen der Werkstoffauswüchse durch die dabei verwendeten Werkzeuge die Glasscheibe und/oder ihre Scheibeneinfassung beschädigt werden und deshalb die an sich fertige Scheibe nachträglich noch Ausschuß wird.

Mit den in den Ansprüchen 1 bis 6 niedergelegten Verfahrensschritten werden Verfahren zum Herstellen und Einbauen einer Glasscheibe mit Rahmen, insbesondere an Fahrzeugteilen angegeben, bei denen der Herstellungsaufwand und der Montageaufwand geringer ist als bei den herkömmlichen Verfahren.

Durch die Verfahren nach einem der Ansprüche 1 bis 6 wird der Rahmen für die Glasscheibe auf einfache Weise mit sehr geringem Aufwand geschaffen und stufenweise sowohl mit der Glasscheibe und mit dem Fahrzeugteil verbunden, wobei die letztgenannten Vorgänge hinsichtlich ihrer Reihenfolge wahlweise gegeneinander vertauscht werden können. Bei allen Verfahren bedarf es nicht mehr komplizierter Preßformen in die die Glasscheibe mit eingelegt werden muß. Dadurch, daß der Rahmen ohne Anwesenheit der Glasscheibe hergestellt wird, ist man sowohl bei der Preßform selbst, wie auch beim Preßvorgang völlig unabhängig von der Form- und Maßgenauigkeit der Glasscheibe, so daß alle Nachteile entfallen, die bei der Herstellung des Rahmens mit in die Preßform eingelegter Glasscheibe auftreten.

Wenn die Verfahren gemäß Anspruch 3 oder 4 nach Anspruch 7 ausgestaltet werden, wird für die damit hergestellten und am Fahrzeugteil lösbar eingebauten Glasscheiben eine zusätzliche Abdichtung geschaffen.

Bei einer Ausgestaltung nach Anspruch 9 wird eine zusätzliche Abdichtungsmöglichkeit zwischen dem Rahmen der Glasscheibe und dem Fahrzeugteil geschaffen, die vor allem bei einer lösbaren Verbindung zwischen dem Rahmen und dem Fahrzeugteil von Vorteil ist, aber auch in den anderen Fällen die dauerhafte Verbindungsstelle zwischen dem Rahmen und dem Fahrzeugteil vor der Einwirkung der Athmosphärilien schützt.

Aus der GB-A-2 093 106 ist ein Vorschlag bekannt, die Glasscheibe mittels eines zweiteiligen Rahmens mit einer Karosserie zu verbinden. Dazu wird auf der einen Seite der Glasscheibe entlang deren Rand ein starrer erster Rahmenteil unlösbar angebracht, der ringsum über den Außenrand der Glasscheibe nach außen übersteht. Mit diesem überstehenden Abschnitt des ersten Rahmenteils wird ein elastischer zweiter Rahmenteil lösbar verbunden, an dem zu diesem Zweck eine umlaufende Haltenut und eine die Haltenut teilweise überdeckende Haltelippe angeformt sind. Der zweite Rahmenteil weist außerdem auf seiner Außenseite weitere Halteelemente in Form einer umlaufenden Haltenut und einer sie teilweise überdeckenden Haltelippe auf, mittels derer der zweite Rahmenteil am Rand der Karosserieöffnung verankert werden kann. Der erste Rahmenteil hat keine eigenständige Anlagefläche für eine genau definierte Anlage an der Glasscheibe. Er wird statt dessen großflächig mit seiner Klebefläche an der Glasscheibe angelegt und zugleich befestigt. Die Art des Klebstoffes, die Art seines Auftrages und die Art und Weise bei der Vereinigung der Glasscheibe mit dem ersten Rahmenteil beeinflussen sehr stark die Relativlage der beiden Teile zueinander. Da die Klebeflächen beiderseits offen sind, können Klebstoffanteile an beiden Rändern der Klebefläche austreten und die Glasscheibe und den ersten Rahmenteil verschmutzen.

Aus der EP-A-0 161 194 ist ein Vorschlag bekannt, die Glasscheibe mit einem einstückigen elastischen Rahmen unlösbar zu verbinden, der seinerseits mit der Karosserie lösbar verbunden wird. Dieser Rahmen hat ebenfalls keine eigenständige Anlagefläche für eine genau definierte Anlage an der Glasscheibe. Statt dessen erfolgt die Anlage auch hier an den Klebeflächen und über den Klebstoffauftrag. Da die Klebeflächen beiderseits offen sind, kann auch hier der Klebstoff seitlich austreten und die Glasscheibe und den Rahmen verschmutzen.

Im folgenden wird die Erfindung anhand mehrerer in der Zeichnung dargestellter Ausführungsbeispiele von an einem Fahrzeugteil fertig eingebauter Glasscheiben mit Rahmen näher erläutert. Es zeigen:
- Fig. 1: einen ausschnittweise und vergrößert dargestellten Querschnitt eines ersten Ausführungsbeispieles der Glasscheibe mit Rahmen an einem Fahrzeugteil lösbar montiert,
- Fig. 2: einen ausschnittweise und vergrößert dargestellten Querschnitt eines zweiten Ausführungsbeispieles der Glasscheibe mit Rahmen an einem Fahrzeugteil lösbar montiert,
- Fig. 3: einen ausschnittweise und vergrößert dargestellten Querschnitt eines dritten Ausführungsbeispieles der Glasscheibe mit Rahmen an einem Fahrzeugteil lösbar montiert,
- Fig. 4: einen ausschnittweise und vergrößert dargestellten Querschnitt eines vierten Ausführungsbeispieles der Glasscheibe mit Rahmen an einem Fahrzeugteil unlösbar montiert.

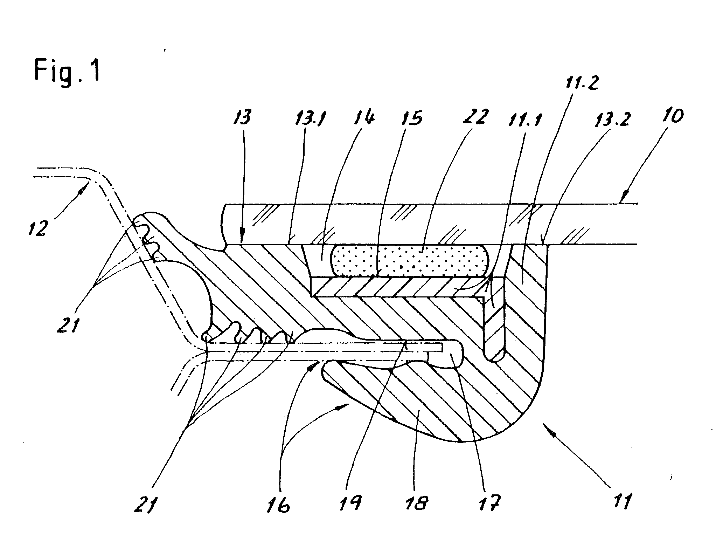

Bei dem aus Fig. 1 ersichtlichen Ausführungsbeispiel ist eine Glasscheibe 10 mit Rahmen 11 vorhanden, die mit einem Fahrzeugteil 12 verbunden ist, um dort eine nicht näher dargestellte Öffnung zu verschließen.

Der Rahmen 11 ist als Kunststoff-Formteil hergestellt. Das Gesamtprofil des Rahmens 11 wird durch zwei Profilabschnitte gebildet, von denen der eine Profilabschnitt 11.1 aus einem Kunststoff höherer Formfestigkeit und größerer Steifigkeit und der andere Profilabschnitt 11.2 aus einem Kunststoff geringerer Formfestigkeit und größerer Elastizität besteht, die schon bei ihrer Herstellung unlösbar miteinander verbunden werden, weshalb der Rahmen 11 im folgenden als einheitliches Bauteil betrachtet wird.

Auf der der Glasscheibe 10 zugekehrten Seite weist der Rahmen 11 eine erste Anlagefläche 13 für die Anlage der Glasscheibe 10 auf. Diese Anlagefläche wird durch eine nutförmige Ausnehmung 14 in die zwei Abschnitte 13.1 und 13.2 unterteilt. Der parallel zu der Anlagefläche 13 verlaufende Boden der Ausnehmung 14 dient als Klebefläche 15 des Rahmens 11.

An der von der Glasscheibe 10 abgekehrten Seite des Rahmens ist ein Halteelement 16 vorhanden, das durch eine entlang dem Rahmen umlaufende Haltenut 17 und eine die Haltenut 17 teilweise überdeckende Halteleiste 18 gebildet wird. Im Ruhezustand des Rahmens 11 hat die Haltenut 17 eine lichte Weite, die kleiner als die Dicke des später darin aufzunehmenden Abschnittes des Fahrzeugteils 12 ist. Die von der Glasscheibe 10 abgekehrte Seitenwand der Haltenut 17 ist zugleich als zweite Anlagefläche 19 des Rahmens 11 ausgebildet, und zwar für die Anlage des Rahmens 11 am Fahrzeugteil 12.

Im Bereich des Seitenrandes der Glasscheibe 10 sind an den beiden von der Glasscheibe abgekehrten Seiten des Rahmens 11 Abdichtungselemente in Form von entlang dem Rahmen umlaufenden Dichtrippen 21 angeformt, die in zwei Gruppen aufgeteilt sind. Im entspannten Ausgangszustand ragen die Dichtrippen 21 zum Teil über die später vorhandene Umrißlinie des Fahrzeugteils 12 hinaus, so daß sie im eingebauten Zustand am Fahrzeugteil 12 mit einer gewissen Vorspannung anliegen.

Das Herstellen des Rahmens 11 mit der Glasscheibe 10 und ihr Einbau am Fahrzeugteil 12 laufen folgendermaßen ab:

Der Rahmen 11 wird als Kunststoff-Formteil als komplettes Bauteil hergestellt. An der Klebefläche 15 des Rahmens 11 wird ein Klebemittel 22 angebracht, wobei außerdem zumindest in dem der Klebefläche 15 später gegenüberliegenden Flächenbereich der Glasscheibe 10 ein Haftvermittler angebracht wird. Die Glasscheibe 10 wird an der ersten Anlagefläche 13 des Rahmens 11 angelegt und mittels des Klebemittels 22 mit dem Rahmen 11 unlösbar verbunden. Der Rahmen 11 mit der Glasscheibe 10 wird am Fahrzeugteil 12 angelegt, und zwar zunächst mit der Außenseite der Halteleiste 18. In die Haltenut 17 ist in üblicher Weise zuvor eine Montageschnur eingelegt, die nach der Anlage des Rahmens 11 am Fahrzeugteil 12 von einem Ende ausgehend ringsrum aus der Haltenut 17 herausgezogen wird, wodurch die Halteleiste 18 an dem Rand des Fahrzeugteils 12 vorbei herausgehoben wird und sie sich anschließend auf der Außenseite des betreffenden Flächenbereiches des Fahrzeugteils 12 aufgrund der ihr innewohnenden Vorspannung anlegt und damit den Rahmen 11 mit der Glasscheibe 10 am Fahrzeugteil 12 festhält. In dem Maße, in dem die Halteleiste 18 unter dem Fahrzeugteil 12 weggezogen wird, legt sich die zweite Anlagefläche 19 des Rahmens 11 am Fahrzeügteil 12 an. Dabei werden auch die Dichtungsrippen 21 stärker gegen das Fahrzeugteil 12 gedrückt, so daß sie sich spätestens dann elastisch verformen und mit der daraus resultierenden Vorspannkraft am Fahrzeugteil 12 dichtend anlegen.

Nach der Herstellung des Rahmens 11 kann die Montage der Glasscheibe 10 und ihr Einbau am Fahrzeugteil 12 auch folgendermaßen ablaufen:

Nach der Herstellung des Rahmens 11 als komplettes Bauteil wird der Rahmen 11 ohne die Glasscheibe 10 am Fahrzeugteil 12 angelegt und in der bekannten Weise durch Herausziehen der Montageschnur mit der zweiten Anlagefläche 19 am Fahrzeugteil 12 angelegt und mit diesem lösbar verbunden. An der Klebefläche 15 wird das Klebemittel 22 angebracht und außerdem die für eine gute Haftung erforderlichen Haftvermittler an den betreffenden Flächen angebracht Dann wird die Glasscheibe 10 an der ersten Anlagefläche 13 angelegt und mittels des Klebemittels 22 mit dem Rahmen 11 unlösbar verbunden.

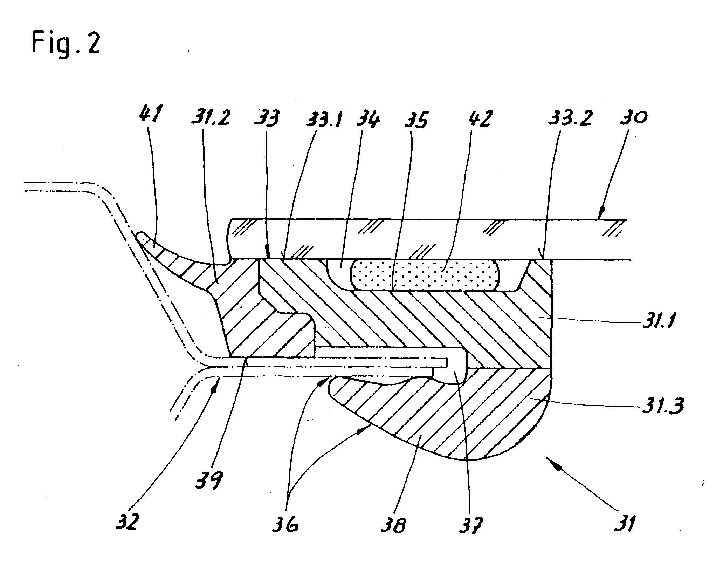

Bei dem aus Fig. 2 ersichtlichen Ausführungsbeispiel ist die Glasscheibe 30 mit dem Rahmen 31 vorhanden, die mit dem Fahrzeugteil 32 lösbar verbunden werden.

Das Gesamtprofil des Rahmens 31 wird durch drei Profilabschnitte gebildet, von denen der eine Profilabschnitt 31.1 wiederum aus einem Kunststoff höherer Formfestigkeit und größerer Steifigkeit und die anderen beiden Profilabschnitte 31.2 und 31.3 aus einem Kunststoff geringerer Formfestigkeit und größerer Elastizität bestehen.

Auf der der Glasscheibe 30 zugekehrten Seite ist wieder die erste Anlagefläche 33 für die Anlage der Glasscheibe 30 angeformt. Sie wird durch die Ausnehmung 34 in die zwei Abschnitte 33.1 und 33.2 unterteilt Der Boden der Ausnehmung 34 dient wieder als Klebefläche 35.

Auf der von der Glasscheibe 30 abgekehrten Seite ist das Halteelement 36 vorhanden, das durch die umlaufende Haltenut 37 und die sie teilweise überdekkende Halteleiste 38 gebildet wird. Die Halteleiste 38 stimmt hier weitgehend mit dem Profilabschnitt 31.3 des Rahmens 31 überein. Die zweite Anlagefläche 39 liegt bei dem Rahmen 31 außerhalb der Haltenut 37. Deren der Halteleiste 38 zugekehrte Seitenwand ist um ein gewisses Maß gegenüber der Fluchtebene der zweiten Anlagefläche 39 zurückversetzt. Die später am Fahrzeugteil 32 anliegenden Abschnitte der Halteleiste 38 haben im entspannten Ausgangszustand von der Fluchtebene der zweiten Anlagefläche 39 einen Abstand, der kleiner als die Dicke des später an ihnen anliegenden Abschnittes des Fahrzeugteils 32 ist, so daß die Halteleiste 38 später mit einer gewissen Vorspannung am Fahrzeugteil 32 anliegt.

Im Bereich des Seitenrandes der Glasscheibe 30 ist ein Abdichtungselement in Form einer einzigen umlauenden Dichtlippe 41 angeformt, die im entspannten Ausgangszustand zum Teil in den Raum hineinragt, den später das Fahrzeugteil 32 einnimmt, so daß sie nach dem Einbau mit einer gewissen Vorspannung an dem Fahrzeugteil 32 anliegt.

Die Montage und der Einbau der Glasscheibe 30 erfolgen in ähnlicher Weise wie bei der Glasscheibe 10. Ein Klebemittel 42: wird an der Klebefläche 35 angebracht und, soweit für eine gute Haftung erforderlich, zuvor an der einen und/oder an der anderen Fläche ein Haftvermittler angebracht. Die Glasscheibe 30 wird an der ersten Anlagefläche 33 angelegt und mittels des Klebstoffes 42 mit dem Rahmen 31 unlösbar verbunden. Der Rahmen 31 mit der Glasscheibe 30 wird mit der zweiten Anlagefläche 39 am Fahrzeugteil 32 angelegt und durch Ausziehen der in die Haltenut 37 eingelegten Montageschnur mittels der Haltevorrichtung 36 mit dem Fahrzeugteil 32 lösbar verbunden.

Auch bei dieser Ausführungsform können nach dem Herstellen des Rahmens 31 die Montage- und Einbauvorgänge in einer anderen Reihenfolge durchgeführt werden, wie das zuvor bei der Glasscheibe 10 und dem Rahmen 11 geschildert wurde.

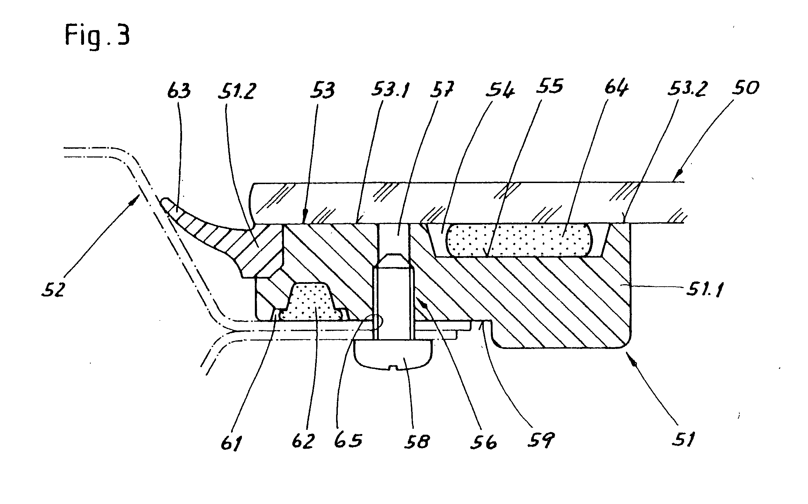

Bei dem aus Fig. 3 ersichtlichen Ausführungsbeispiel ist die Glasscheibe 50 mit Rahmen 51 vorhanden, die mit dem Fahrzeugteil 52 lösbar verbunden ist.

Der Rahmen 51 besteht als Baueinheit aus den Profilabschnitten 51.1 und 51.2 die wie bisher unterschiedliche Eigenschaften haben.

Auf der der Glasscheibe 50 zugekehrten Seite ist am Rahmen 51 die erste Anlagefläche 53 angeformt, die durch die Ausnehmung 54 in zwei Abschnitte 53.1 und 53.2 unterteilt ist. Der Boden der Ausnehmung 54 bildet die Klebefläche 55.

An der von der Glasscheibe 50 abgekehrten Seite des Rahmens 51 sind mehrere Verankerungselemente 56 angeformt, die als zylindrische Sacklöcher oder Durchgangslöcher 57 ausgebildet sind. Mit diesen wirken selbstschneidende Flachkopfschrauben 58 als weitere Verankerungselemente zusammen.

Am Rahmen 51 ist auf der von der Glasscheibe 50 abgekehrten Seite im Bereich der Verankerungselemente 56 die zweite Anlagefläche 59 für das Anlegen am Fahrzeugteil 52 angeformt. Im Bereich der zweiten Anlagefläche 59 ist als Dichtungsfläche 61 eine entlang dem Rahmen umlaufende Nut angeformt, in die ein ringförmig in sich geschlossenes Dichtungselement 62 eingesetzt ist. Je nach der Querschnittsform der Nut und/oder des Dichtungselementes 62 kann dieses lösbar in die Nut eingesetzt werden oder mittels eines Klebemittels mit der Dichtungsfläche 61 unlösbar verbunden werden. Das Dichtungselement 62 wird zweckmäßigerweise aus einem porigen oder, noch besser, aus einem zelligen Elastomer hergestellt.

Im Bereich des Seitenrandes der Glasscheibe 50 ist am Rahmen 51 ein weiteres Abdichtungselement in Form einer einzigen umlaufenden Dichtlippe 63 angeformt, die wie beim Rahmen 31 im ungespannten Ruhezustand zum Teil in den Raum hineinragt, den später das Fahrzeugteil 52 einnimmt. Die Dichtlippe 63 und ihre Wurzel stimmen weitgehend mit dem Profilabschnitt 51.2 überein.

Bei der Montage und dem Einbau wird zunächst im Bereich der Klebefläche 55 die für eine gute Haftung erforderlichen Haftvermittler am Rahmen 51 und/oder an der Glasscheibe 50 sowie an der Klebefläche 55 das Klebemittel 64 angebracht. Die Glasscheibe 50 wird an der ersten Anlagefläche 53 angelegt und mittels des Klebemittels 64 mit dem Rahmen 51 unlösbar verbunden. Am Rahmen 51 wird an der Dichtungsfläche 61 das Dichtungselement 62 lösbar oder unlösbar angebracht. Der Rahmen 51 mit der Glasscheibe 50 wird mit seiner zweiten Anlagefläche 59 am Fahrzeugteil 52 angelegt Die Flachkopfschrauben 58 werden durch die am Fahrzeugteil 52 vorhandenen und mit den Durchgangslöchern 57 im Rahmen 51 fluchtenden Durchgangslöcher 65 hindurchgesteckt und in die als Verankerungselemente 56 dienenden Durchgangslöcher 57 eingeschraubt und festgezogen. Dabei legen sich sowohl das Dichtungselement 62 wie auch die Dichtlippe 63 mit einer gewissen Vorspannung am Fahrzeugteil 52 an.

Mit den gleichen Grundelementen kann die Montage und der Einbau des Rahmens 51 und der Glasscheibe 50 auch in der Weise erfolgen, daß der Rahmen 51 mit dem zuvor daran angebrachten Dichtungselement 62 am Fahrzeugteil 52 angelegt wird und mittels der Verankerungselemente 56 und der Schrauben 58 daran verankert oder befestigt wird. Anschließend werden etwaige Haftvermittler an den betreffenden Flächenbereichen und das Klebemittel 64 an der Klebefläche 55 angebracht und danach die Glasscheibe 50 an der ersten Anlageflche 53 angelegt und mittels des Klebemittels 64 mit dem Rahmen 51 unlösbar verbunden.

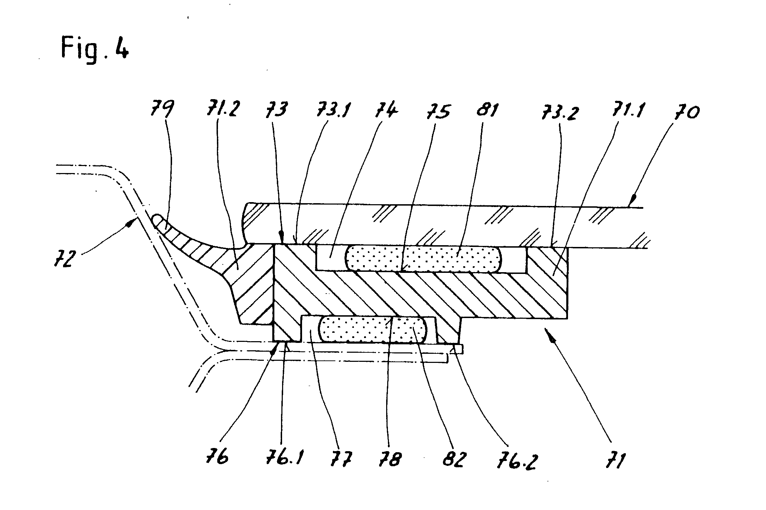

Bei dem aus Fig. 4 ersichtlichen Ausführungsbeispiel ist die Glasscheibe 70 mit dem Rahmen 71 vorhanden, die mit dem Fahrzeugteil 72 unlösbar verbunden ist.

Das Gesamtprofil des Rahmens 71 wird durch die Profilabschnitte 71.1 und 71.2 gebildet, deren Werkstoffe unterschiedliche Eigenschaften haben.

Auf der der Glasscheibe 70 zugekehrten Seite des Rahmens 71. ist die erste Anlagefläche 73 vorhanden, die durch die Ausnehmung 74 in die beiden Abschnitte 73.1 und 73.2 unterteilt wird. Der Boden der Ausnehmung 74 bildet die erste Klebefläche 75 des Rahmens 71.

Auf der von der Glasscheibe 70 abgekehrten Seite des Rahmens 71 ist die zweite Anlagefläche 76 angeformt, die durch eine Ausnehmung 77 in die. beiden Abschnitte 76.1 und 76.2 unterteilt wird. Der parallel zur zweiten Anlagefläche 76 verlaufende Boden der Ausnehmung 77 bildet eine zweite Klebefläche 78 des Rahmens 71.

Im Bereich des Seitenrandes der Glasscheibe 70 ist als Abdichtungselement eine umlaufende Dichtlippe 79 angeformt. Die Dichtlippe 79 und ihre Wurzel stimmen weitgehend mit dem Profilteil 71.2 überein.

Bei der Montage und dem Einbau der Glasscheibe 70 und des Rahmens 71 wird zusammen mit dem erforderlichen Haftvermittler das erste Klebemittel 81 an der ersten Klebefläche 75 angebracht Die Glasscheibe 70 wird an der ersten Anlagefläche 73 angelegt und mittels des ersten Klebemittels 81 mit dem Rahmen 71 dauerhaft verbunden. An der zweiten Klebefläche 78 wird ein zweite Klebemittel 82, bei Bedarf zusammen mit Haftvermittlern, angebracht. Der Rahmen 71 mit der Glasscheibe 70 wird mit seiner zweiten Anlagefläche 76 am Fahrzeugteil 72 angelegt und mittels des zweiten Klebemittels 82 dauerhaft verbunden.

Auch bei diesem Ausführungsbeispiel ist eine andere Reihenfolge der Montage und Einbauvorgänge möglich, indem am Rahmen 71 zuerst das zweite Klebemittel 82 an der zweiten Klebefläche 78 angebracht wird und der Rahmen 71 zuerst am Fahrzeugteil 72 angelegt und mit ihm dauerhaft verbunden wird und erst anschließend das erste Klebemittel 81 an der ersten Klebefläche 75 angebracht wird und die Glasscheibe 70 an der ersten Anlagefläche 73 angelegt und mittels des ersten Klebemittels 81 mit dem Rahmen 71 dauerhaft verbunden wird.

### Bezugszeichenliste F 24. 12. FC 3

- 10: Glasscheibe
- 11: Rahmen
- 12: Fahrzeugteil
- 13: 1. Anlageflche
- 14: Ausnehmung
- 15: Klebefläche
- 16: Halteelement
- 17: Haltenut
- 18: Halteleiste
- 19: 2. Anlagefläche
- 21: Dichtrippen
- 22: Klebemittel
- 30: Glasscheibe
- 31: Rahmen
- 32: Fahrzeugteil
- 33: 1. Anlagefläche
- 32: Ausnehmung
- 33: Klebefläche
- 34: Ausnehmung
- 35: Klebefläche
- 36: Halteelement
- 37: Haltenut
- 38: Halteleiste
- 39: 2. Anlagefläche
- 41: Dichtlippe
- 42: Klebemittel
- 50: Glasscheibe
- 51: Rahmen
- 52: Fahrzeugteil
- 53: 1. Anlagefläche
- 54: Ausnehmung
- 55: Klebefläche
- 56: Verankerungselemente
- 57: Durchgangsloch
- 58: Flachkopfschrauben
- 59: 2. Anlagefläche
- 61: Dichtungsfläche
- 62: Dichtungselement
- 63: Dichtlippe
- 64: Klebemittel
- 65: Durchgangslöcher
- 70: Glasscheibe
- 71: Rahmen
- 72: Fahrzeugteil
- 73: 1. Anlagefläche
- 74: Ausnehmung
- 75: Klebefläche
- 76: 2. Anlagefläche
- 77: Ausnehmung
- 78: Klebefläche
- 79: Dichtlippe
- 81: Klebemittel
- 82: Klebemittel

## Patentansprüche

1. Verfahren zum Herstellen und Einbauen einer Glasscheibe mit Rahmen, mit den Verfahrensschritten,
- der Rahmen (11) wird als ringförmig in sich geschlossenes Kunststoff-Formteil im Spritzgußverfahren hergestellt,
- - wobei auf einer Seite des Rahmens (11) eine erste Anlagefläche (13) zum rollflächigen Anlegen der Glasscheibe (10) angeformt wird,
- - wobei an derselben Seite des Rahmens (11) eine Klebefläche (15) zum Anbringen eines Klebemittels (22) angeformt wird, die durch den Boden einer Ausnehmung (14) gebildet wird, die die erste Anlagefläche (13) in zwei Abschnitte (13.1; 13.2) unterteilt,
- - wobei an einer der anderen Seiten des Rahmens (11) ein Halteelement (16) angeformt wird, das durch eine entlang dem Rahmen (11) umlaufende Haltenut (17) und eine die Haltenut (17) teilweise überdeckende Halteleiste (18) gebildet wird und
- - wobei an einer dieser anderen Seiten des Rahmens (11) eine zweite Anlagefläche (19) zum Anlegen an einem Fahrzeugteil (12) angeformt wird,
- ein Klebemittel (22) wird an der Klebefläche (15) und/oder an dem ihr künftig gegenüberliegenden Flächenbereich der Glasscheibe (10) angebracht,
- die Glasscheibe (10) wird an der ersten Anlagefläche (13) des Rahmens (11) angelegt und mittels des Klebemittels (22) mit dem Rahmen (11) unlösbar verbunden,
- der Rahmen (11) mit Scheibe (10) wird mit der zweiten Anlagefläche (19) an dem Fahzeugteil (12) angelegt und mittels des Halteelementes (16) mit dem Fahrzeugteil (12) lösbar verbunden.

2. Verfahren zum Herstellen und Einbauen einer Glasscheibe mit Rahmen, mit den Verfahrensschritten,
- der Rahmen (11) wird als ringförmig in sich geschlossenes Kunststoff-Formteil im Spritzgußverfahren hergestellt,
- - wobei auf einer Seite des Rahmens (11) eine erste Anlagefläche (13) zum rollflächigen Anlegen der Glasscheibe (10) angeformt wird,
- - wobei an derselben Seite des Rahmens (11) eine Klebefläche (15) zum Anbringen eines Klebemittels (22) angeformt wird, die durch den Boden einer Ausnehmung (14) gebildet wird, die die erste Anlagefläche (13) in zwei Abschnitte (13.1; 13.2) unterteilt,
- - wobei an einer der anderen Seiten des Rahmens (11) ein Halteelement (16) angeformt wird, das durch eine entlang dem Rahmen (11) umlaufende Haltenut (17) und eine die Haltenut (17) teilweise überdeckende Halteleiste (18) gebildet wird und
- - wobei an einer dieser anderen Seiten des Rahmens (11) eine zweite Anlagefläche (19) zum Anlegen an einem Fahrzeugteil (12) angeformt wird,
- der Rahmen (11) wird mit der zweiten Anlagefläche (19) am Fahrzeugteil (12) angelegt und mittels des Halteelementes (16) mit dem Fahrzeugteil (12) lösbar verbunden,
- ein Klebemittel (22) wird an der Klebefläche (15) und/oder an dem ihr künftig gegenüberliegenden Flächenbereich der Glasscheibe (10) angebracht.
- die Glasscheibe (10) wird an der ersten Anlagefläche (13) des Rahmens (11) angelegt und mittels des Klebemittels (22) mit dem Rahmen (11) unlösbar verbunden.

3. Verfahren zum Herstellen und Einbauen einer Glasscheibe mit Rahmen, mit den Verfahrensschritten,
- der Rahmen (51) wird als ringförmig in sich geschlossenes Kunststoff-Formteil im Spritzgußverfahren hergestellt,
- - wobei auf einer Seite des Rahmens (51) eine erste Anlagefläche (53) zum rollflächigen Anlegen der Glasscheibe (50) angeformt wird,
- - wobei an derselben Seite des Rahmens (51) eine Klebefläche (55) zum Anbringen eines Klebemittels (64) angeformt wird, die durch den Boden einer Ausnehmung (54) gebildet wird, die die erste Anlagefläche (53) in zwei Abschnitte (53.1; 53.2) unterteilt,
- - wobei an einer der anderen Seiten des Rahmens (51) mehrere Verankerungselemente (56) angeformt werden, die allein oder in Verbindung mit weiteren Verankerungselementen (58) dem lösbaren Verbinden mit einem Fahrzeugteil (52) dienen und
- - wobei an einer dieser anderen Seiten des Rahmens (51) eine zweite Anlagefläche (59) zum Anlegen an dem Fahrzeugteil (52) angeformt wird,
- ein Klebemittel (64) wird an der Klebefläche (55) und/oder an dem ihr künftig gegenüberliegenden Flächenbereich der Glasscheibe (50) angebracht,
- die Glasscheibe (50) wird an der ersten Anlagefläche (53) des Rahmens (51) angelegt und mittels des Klebemittels (64) mit dem Rahmen (51) unlösbar verbunden,
- der Rahmen (51) mit der Scheibe (50) wird mit der zweiten Anlagefläche (59) am Fahrzeugteil (52) angelegt und mittels der Verankerungselemente (56, 58) mit dem Fahrzeugteil (52) lösbar verbunden.

4. Verfahren zum Herstellen und Einbauen einer Glasscheibe mit Rahmen, mit den Verfahrensschritten,
- der Rahmen (51) wird als ringförmig in sich geschlossenes Kunststoff-Formteil im Spritzgußverfahren hergestellt,
- - wobei auf einer Seite des Rahmens (51) eine erste Anlagefläche (53) zum rollflächigen Anlegen der Glasscheibe (50) angeformt wird,
- - wobei an derselben Seite des Rahmens (51) eine Klebefläche (55) zum Anbringen eines Klebemittels (64) angeformt wird, die durch den Boden einer Ausnehmung (54) gebildet wird, die die erste Anlagefläche (53) in zwei Abschnitte (53.1; 53.2) unterteilt,
- - wobei an einer der anderen Seiten des Rahmens (51) mehrere Verankerungselemente (56) angeformt werden, die allein oder in Verbindung mit weiteren Verankerungselementen (58) dem lösbaren Verbinden mit dem Fahrzeugteil (52) dienen,
- der Rahmen (51) wird mit der zweiten Anlagefläche (59) am Fahrzeugteil (52) angelegt und mittels der Verankerungselemente (56, 58) mit dem Fahrzeugteil (52) lösbar verbunden,
- ein Klebemittel (64) wird an der Klebefläche (55) und/oder an dem ihr künftig gegenüberliegenden Flächenbereich der Glasscheibe (50) angebracht,
- die Glasscheibe (50) wird an der ersten Anlagefläche (53) des Rahmens (51) angelegt und mittels des Klebemittels (64) mit dem Rahmen (51) unlösbar verbunden.

5. Verfahren zum Herstellen und Einbauen einer Glasscheibe mit Rahmen, mit den Verfahrensschritten,
- der Rahmen (71) wird als ringförmig in sich geschlossenes Kunststoff-Formteil im Spritzgußverfahren hergestellt,
- - wobei auf einer Seite des Rahmens (71) eine erste Anlagefläche (73) zum rollflächigen Anlegen der Glasscheibe (70) angeformt wird,
- - wobei an derselben Seite des Rahmens (71) eine erste Klebefläche (75) zum Anbringen eines ersten Klebemittels (81) angeformt wird, die durch den Boden einer Ausnehmung (74) gebildet wird, die die erste Anlagefläche (73) in zwei Abschnitte (73.1; 73.2) unterteilt,
- - wobei an einer der anderen Seiten des Rahmens (71) eine zweite Anlagefläche (76) zum Anlegen an einem Fahrzeugteil (72) angeformt wird.
- - wobei an der anderen Seite eine zweite Klebefläche (78) zum Anbringen eines zweiten Klebemittels (82) angeformt wird,
- das erste Klebemittel (81) wird an der ersten Klebefläche (75) und/oder an dem ihr künftig gegenüberliegenden Flächenbereich der Glasscheibe (70) angebracht.
- die Glasscheibe (70) wird an der ersten Anlagefläche (73) des Rahmens (71) angelegt und mittels des ersten Klebemittels (81) mit dem Rahmen (71) unlösbar verbunden,
- ein zweites Klebemittel (82) wird an der zweiten Klebefläche (78) des Rahmens (71) und/oder an dem ihr künftig gegenüberliegenden Flächenbereich des Fahrzeugteils (72) angebracht,
- der Rahmen (71) mit Glasscheibe (70) wird mit der zweiten Anlagefläche (76) an dem Fahrzeugteil (72) angelegt und mittels des zweiten Klebemittels (82) mit dem Fahrzeugteil (72) unlösbar verbunden.

6. Verfahren zum Herstellen und Einbauen einer Glasscheibe mit Rahmen, mit den Verfahrensschritten,
- der Rahmen (71) wird als ringförmig in sich geschlossenes Kunststoff-Formteil im Spritzgußverfahren hergestellt,
- - wobei auf einer Seite des Rahmens (71) eine erste Anlagefläche (73) zum rollflächigen Anlegen der Glasscheibe (70) angeformt wird,
- - wobei an derselben Seite des Rahmens (71) eine erste Klebefläche (75) zum Anbringen eines ersten Klebemittels (81) angeformt wird, die durch den Boden einer Ausnehmung (74) gebildet wird, die die erste Anlagefläche (73) in zwei Abschnitte (73.1; 73.2) unterteilt,
- - wobei an einer der anderen Seiten des Rahmens (71) eine zweite Anlagefläche (76) zum Anlegen an einem Fahrzeugteil (72) angeformt wird,
- - wobei an der anderen Seite eine zweite Klebefläche (78) zum Anbringen eines zweiten Klebemittels (82) angeformt wird,
- das zweite Klebemittel (82) wird an der zweiten Klebefläche (78) und/oder an dem ihr künftig gegenüberliegenden Flächenbereich des Fahrzeugteils (72) angebracht,
- der Rahmen (71) wird mit der zweiten Anlagefläche (76) an dem Fahrzeugteil (72) angelegt und mittels des zweiten Klebemittels (82) mit dem Fahrzeugteil (72) unlösbar verbunden,
- das erste Klebemittel (81) wird an der ersten Klebefläche (75) und/oder an dem ihr künftig gegenüberliegenden Flächenbereich der Glasscheibe (70) angebracht,
- die Glasscheibe (70) wird an der ersten Anlagefläche (73) angelegt und mittels des ersten Klebemittels (81) mit dem Rahmen (71) unlösbar verbunden.

7. Verfahren nach Anspruch 3 oder 4,
**gekennzeichnet durch** die weiteren Verfahrensschritte,
- an einer der dem Fahrzeugteil (52) zugekehrten Seiten des Rahmens (51) wird eine Dichtungsfläche (61) für die Anbringung eines zusätzlichen Dichtungselementes (62) angeformt,
- vor dem Anlegen des Rahmens (51) am Fahrzeugteil (52) wird an der Dichtfläche (61) ein zusätzliches Dichtungselement (62) lösbar oder unlösbar angebracht.

8. Verfahren nach einem der Ansprüche 1 bis 7,
**gekennzeichnet durch** den weiteren Verfahrensschritt,
- der Rahmen (11) wird als Formspritzteil hergestellt.

9. Verfahren nach einem der vorhergehenden Ansprüche,
**gekennzeichnet durch** den weiteren Verfahrensschritt,
- zumindest an einer der dem Fahrzeugteil (12) zugekehrten Seiten des Rahmens (11, 31) werden Abdichtungselemente (21, 41) zum (zusätzlichen) Abdichten gegenüber dem Fahrzeugteil (12) angeformt,
- die Abdichtungselemente werden vorzugsweise als umlaufende Dichtungsrippen (21) und/oder als eine oder mehrere Dichtlippen (41) ausgebildet.

## Claims

1. A method of producing and fitting a glass pane with a frame, with the method steps,
- the frame (11) is produced in the injection-moulding process as a moulded part of plastics material which is continuous *per se* in an annular manner,
-- wherein a first abutment face (13) for the abutment of the glass pane (10) over its entire area is integrally moulded on one side of the frame (11),
-- wherein an adhesion face (15) for the application of an adhesive (22) is integrally moulded on the same side of the frame (11), the said adhesion face (15) being formed by the base of a recess (14) which subdivides the first abutment face (13) into two portions (13.1; 13.2),
-- wherein a retaining element (16), which is formed by a retaining groove (17) extending around the frame (11) and a retaining strip (18) partly covering the retaining groove (17), is integrally moulded on one of the other sides of the frame (11), and
-- wherein a second abutment face (19) for abutment against a part (12) of the vehicle is integrally moulded on one of the said other sides of the frame (11),
- an adhesive (22) is applied to the adhesion face (15) and/or to the face area of the glass pane (10) which will be opposite it,
- the glass pane (10) is placed against the first abutment face (13) of the frame (11) and is joined undetachably to the frame (11) by means of the adhesive (22), and
- the frame (11) with the pane (10) is placed with the second abutment face (19) against the part (12) of the vehicle and is joined detachably to the part (12) of the vehicle by means of the retaining element (16).

2. A method of producing and fitting a glass pane with a frame, with the method steps,
- the frame (11) is produced in the injection-moulding process as a moulded part of plastics material which is continuous *per se* in an annular manner,
-- wherein a first abutment face (13) for the abutment of the glass pane (10) over its entire area is integrally moulded on one side of the frame (11),
-- wherein an adhesion face (15) for the application of an adhesive (22) is integrally moulded on the same side of the frame (11), the said adhesion face (15) being formed by the base of a recess (14) which subdivides the first abutment face (13) into two portions (13.1; 13.2),
-- wherein a retaining element (16), which is formed by a retaining groove (17) extending around the frame (11) and a retaining strip (18) partly covering the retaining groove (17), is integrally moulded on one of the other sides of the frame (11), and
-- wherein a second abutment face (19) for abutment against a part (12) of the vehicle is integrally moulded on one of the said other sides of the frame (11),
- the frame (11) is placed with the second abutment face (19) against the part (12) of the vehicle and is joined detachably to the part (12) of the vehicle by means of the retaining element (16),
- an adhesive (22) is applied to the adhesion face (15) and/or to the face area of the glass pane (10) which will be opposite it, and
- the glass pane (10) is placed against the first abutment face (13) of the frame (11) and is joined undetachably to the frame (11) by means of the adhesive (22).

3. A method of producing and fitting a glass pane with a frame, with the method steps,
- the frame (51) is produced in the injection-moulding process as a moulded part of plastics material which is continuous *per se* in an annular manner,
-- wherein a first abutment face (53) for the abutment of the glass pane (50) over its entire area is integrally moulded on one side of the frame (51),
-- wherein an adhesion face (55) for the application of an adhesive (64) is integrally moulded on the same side of the frame (51), the said adhesion face (55) being formed by the base of a recess (54) which subdivides the first abutment face (53) into two portions (53.1; 53.2),
-- wherein a plurality of anchoring elements (56), which are used alone or in conjunction with further anchoring elements (58) for detachable connexion to a part (52) of the vehicle, are integrally moulded on one of the other sides of the frame (51), and
-- wherein a second abutment face (59) for abutment against the part (52) of the vehicle is integrally moulded on one of the said other sides of the frame (51),
- an adhesive (64) is applied to the adhesion face (55) and/or to the face area of the glass pane (50) which will be opposite it,
- the glass pane (50) is placed against the first abutment face (53) of the frame (51) and is joined undetachably to the frame (51) by means of the adhesive (64), and
- the frame (51) with the pane (50) is placed with the second abutment face (59) against the part (52) of the vehicle and is joined detachably to the the part (52) of the vehicle by means of the anchoring elements (56, 58).

4. A method of producing and fitting a glass pane with a frame, with the method steps,
- the frame (51) is produced in the injection-moulding process as a moulded part of plastics material which is continuous *per se* in an annular manner,
-- wherein a first abutment face (53) for the abutment of the glass pane (50) over its entire area is integrally moulded on one side of the frame (51),
-- wherein an adhesion face (55) for the application of an adhesive (64) is integrally moulded on the same side of the frame (51), the said adhesion face (55) being formed by the base of a recess (54) which subdivides the first abutment face (53) into two portions (53.1; 53.2), and
-- wherein a plurality of anchoring elements (56), which are used alone or in conjunction with further anchoring elements (58) for detachable connexion to the part (52) of the vehicle, are integrally moulded on one of the other sides of the frame (51),
- the frame (51) is placed with the second abutment face (59) against the part (52) of the vehicle and is joined detachably to the the part (52) of the vehicle by means of the anchoring elements (56, 58),
- an adhesive (64) is applied to the adhesion face (55) and/or to the face area of the glass pane (50) which will be opposite it, and
- the glass pane (50) is placed against the first abutment face (53) of the frame (51) and is joined undetachably to the frame (51) by means of the adhesive (64).

5. A method of producing and fitting a glass pane with a frame, with the method steps,
- the frame (71) is produced in the injection-moulding process as a moulded part of plastics material which is continuous *per se* in an annular manner,
-- wherein a first abutment face (73) for the abutment of the glass pane (70) over its entire area is integrally moulded on one side of the frame (71),
-- wherein a first adhesion face (75) for the application of a first adhesive (81) is integrally moulded on the same side of the frame (71), the said adhesion face (75) being formed by the base of a recess (74) which subdivides the first abutment face (73) into two portions (73.1; 73.2),
-- wherein a second abutment face (76) for abutment against a part (72) of the vehicle is integrally moulded on one of the other sides of the frame (71),
-- wherein a second adhesion face (78) for the application of a second adhesive (82) is integrally moulded on the other side,
- the first adhesive (81) is applied to the first adhesion face (75) and/or to the face area of the glass pane (70) which will be opposite it,
- the glass pane (70) is placed against the first abutment face (73) of the frame (71) and is joined undetachably to the frame (71) by means of the first adhesive (81),
- a second adhesive (82) is applied to the second adhesion face (78) of the frame (71) and/or to the face area of the part (72) of the vehicle which will be opposite it, and
- the frame (71) with the glass pane (70) is placed with the second abutment face (76) against the part (72) of the vehicle and is joined undetachably to the part (72) of the vehicle by means of the second adhesive (82).

6. A method of producing and fitting a glass pane with a frame, with the method steps,
- the frame (71) is produced in the injection-moulding process as a moulded part of plastics material which is continuous *per se* in an annular manner,
-- wherein a first abutment face (73) for the abutment of the glass pane (70) over its entire area is integrally moulded on one side of the frame (71),
-- wherein a first adhesion face (75) for the application of a first adhesive (81) is integrally moulded on the same side of the frame (71), the said adhesion face (75) being formed by the base of a recess (74) which subdivides the first abutment face (73) into two portions (73.1; 73.2),
-- wherein a second abutment face (76) for abutment on a part (72) of the vehicle is integrally moulded on one of the other sides of the frame (71),
-- wherein a second adhesion face (78) for the application of a second adhesive (82) is integrally moulded on the other side,
- the second adhesive (82) is applied to the second adhesion face (78) and/or to the face area of the part (72) of the vehicle which will be opposite it,
- the frame (71) is placed with the second abutment face (76) against the part (72) of the vehicle and is joined undetachably to the part (72) of the vehicle by means of the second adhesive (82),
- the first adhesive (81) is applied to the first adhesion face (75) and/or to the face area of the glass pane (70) which will be opposite it, and
- the glass pane (70) is placed against the first abutment face (73) and is joined undetachably to the frame (71) by means of the first adhesive (81).

7. A method according to Claim 3 or 4, **characterized by** the further method steps,
- a sealing face (61) for the application of an additional sealing element (62) is integrally moulded on one of the side[s] of the frame (51) facing the part (52) of the vehicle, and
- an additional sealing element (62) is attached detachably or undetachably to the sealing face (61) before the frame (51) is placed against the part (52) of the vehicle.

8. A method according to one of Claims 1 to 7, **characterized by** the further method step,
- the frame (11) is produced as an injection-moulded part.

9. A method according to one of the preceding Claims, **characterized by** the further method step [*sic*],
- sealing elements (21, 41) for (additionally) sealing off from the part (12) of the vehicle are integrally moulded on at least one of the sides of the frame (11, 31) facing the part (12) of the vehicle, and
- the sealing elements are preferably constructed as continuous sealing ribs (21) and/or as one or more sealing lips (41).

## Revendications

1. Procédé de fabrication et d'incorporation d'une vitre en verre avec cadre, comportant les étapes suivantes :
- le cadre (11) est fabriqué sous la forme d'un anneau fermé constitué par une pièce en matière plastique, moulée par injection,
et dans laquelle
- sur un côté du cadre (11) est moulée une première portée d'appui (13) pour appliquer totalement à plat la vitre (10),
- sur le même côté du cadre (11) est moulée une portée de collage (15) pour y déposer un agent adhésif (22) cette portée étant constituée par le fond d'un évidement (14) qui divise la première portée d'appui (13) en deux sections (13-1 ; 13-2),
- sur un des autres côtés du cadre (11) est moulé un élément de maintien (16) comprenant une rainure de maintien (17) suivant la périphérie du cadre (11) et une baguette de maintien (17),
- sur un de ces autres côtés du cadre (11) est moulée une seconde portée d'appui (19) destinée à venir s'appliquer sur une partie de véhicule (12),
- un agent adhésif (22) est déposé sur la portée de collage (15) et/ou sur la zone superficielle de la vitre (10) qui lui fera face ultérieurement,
- la vitre (10) est posée sur la première portée d'appui (13) du cadre (11) et liée à celui-ci de manière inséparable par l'agent adhésif (22),
- le cadre (11) avec sa vitre (10) est appliqué par sa deuxième portée d'appui (19) sur la partie de véhicule (12) et lié de manière amovible à cette partie par élément de maintien (16).

2. Procédé de fabrication et d'incorporation d'une vitre en verre avec cadre, comportant les étapes suivantes :
- le cadre (11) est fabriqué, sous la forme d'un anneau fermé constitué par une pièce en matière plastique moulée par injection, dans laquelle :
· sur un côté du cadre (11) est moulée une première portée d'appui (13) pour appliquer totalement à plat la vitre (10),
· sur le même côté du cadre (11) est moulée une portée de collage (55) pour y déposer un agent adhésif, cette portée étant constituée par le fond d'un évidement (14) qui divise la première portée d'appui (13) en deux sections (13.1 ; 13.2),
· sur un des autres côtés du cadre (11) est moulé un élément de maintien (16) comprenant une rainure de maintien (17) suivant la périphérie du cadre (11) et une baguette de maintien (18) recouvrant partiellement la rainure (17),
· sur un de ces autres côtés du cadre (11) est moulée une seconde portée d'appui (19) destinée à venir s'appliquer sur une partie de véhicule (12),
- le cadre (11) est appliqué par la seconde portée d'appui (19) sur la partie de véhicule (12) et lié à celle-ci de manière amovible, par l'élément de maintien (16),
- un agent adhésif (22) est déposé sur la portée de collage (15) et/ou sur la zone superficielle de la vitre (10) qui lui fera face ultérieurement,
- la vitre (10) est appliquée sur la première portée d'appui (13) du châssis (11) et liée de manière inséparable au cadre (11) par l'agent adhésif (22).

3. Procédé de fabrication et d'incorporation d'une vitre en verre avec cadre, comportant les étapes suivantes :
- le cadre (51) est fabriqué, sous la forme d'un anneau fermé constitué par une pièce en matière plastique moulée par injection, dans laquelle :
· sur un côté du cadre (51) est moulée une première portée d'appui (53) pour appliquer totalement à plat la vitre (50),
· sur le même côté du cadre (51) est moulée une portée de collage (55) pour y déposer un agent adhésif (64), cette portée étant constituée par le fond d'un évidement (54) qui divise la première portée d'appui (53) en deux sections (53.1 ; 53.2),
· sur un des autres côtés du cadre (51) à sont moulé plusieurs éléments d'ancrage (56) qui, seuls ou en liaison avec d'autres éléments d'ancrage (58) servant à créer ma liaison amovible avec une partie du véhicule (52),
· sur un de ces autres côtés du cadre (51) est moulée une seconde portée d'appui (59) destinée à venir s'appliquer sur une partie de véhicule (52),
- l'agent adhésif (64) est déposé sur la portée de collage (55) et/ou sur la zone superficielle de la vitre (50) qui lui fera face ultérieurement,
- la vitre (50) est appliquée sur la première portée d'appui (53) du cadre (51) et liée de manière inséparable au cadre (51) par l'agent adhésif (64).
- le cadre (51) avec la vitre (50) est appliqué par la seconde portée d'appui (59) sur la partie de véhicule (52) et lié à celle-ci de manière amovible, par les éléments d'ancrage (56, 58),

4. Procédé de fabrication et d'incorporation d'une vitre en verre avec cadre, comportant les étapes suivantes :
- le cadre (51) est fabriqué sous la forme d'un anneau fermé constitué par une pièce en matière plastique moulée par injection, dans laquelle :
· sur un côté du cadre (51) est moulée une première portée d'appui (53) destinée à recevoir totalement à plat la vitre (50),
· sur le même côté du cadre (51) est moulée une portée de collage (55) pour y déposer un agent adhésif (64), cette portée étant constituée par le fond d'un évidement (54) qui divise la première portée d'appui (53) en deux sections (53.1 ; 53.2),
· sur un des autres côtés du cadre (51) sont moulés plusieurs éléments d'ancrage (56) qui seuls ou en liaison avec d'autres éléments d'ancrage (58), servent à créer une liaison amovible avec une partie de véhicule (52),
· le cadre (51) est appliqué par sa seconde portée d'appui (59) sur la partie de véhicule (52) et lié à celle-ci, de manière amovible, par les éléments d'ancrage (56, 58),
- l'agent adhésif (64) est déposé sur la portée de collage (55) et/ou sur la zone superficielle de la vitre (50) qui lui fera face ultérieurement,
- la vitre (50) est appliquée sur la première portée d'appui (53) du cadre (51) et liée de manière inséparable au cadre (51) par l'agent adhésif (64).

5. Procédé de fabrication et d'incorporation d'une vitre avec cadre, comportant les étapes suivantes :
- le cadre (71) est fabriqué, sous la forme d'un anneau fermé constitué par une pièce en matière plastique moulée par injection, dans laquelle :
· sur un côté du cadre (71) est moulée une première portée d'appui (73) pour appliquer totalement à plat la vitre (70),
· sur le même côté du cadre (71) est moulée une portée de collage (75) pour y déposer un premier agent adhésif (81), cette portée étant constituée par le fond d'un évidement (74) qui divise la première portée d'appui (73) en deux sections (73.1 ; 73.2),
· sur un des autres côtés du cadre (71) est moulée une seconde portée d'appui (76) destinée à venir s'appliquer sur une partie de véhicule (72)),
· sur l'autre côté est moulée une seconde portée de collage (78) pour y déposer un second agent adhésif (82),
- le premier agent adhésif (81) est déposé sur la première portée de collage (75) et/ou sur la zone superficielle de la vitre (70) qui lui fera face ultérieurement,
- la vitre (70) est posée sur la première portée d'appui (73) du cadre (71) et liée à celui-ci de manière inséparable par l'agent adhésif (81),
- un second agent adhésif (82) est déposé sur la seconde portée de collage (78) du cadre (71) et/ou sur la zone superficielle de la partie de véhicule (72) qui fera face à cette portée,
- le cadre (71) avec sa vitre (70) est posé par sa seconde portée d'appui (76) sur la partie de véhicule (72) et lié à celle-ci de manière inséparable par le second agent adhésif (82).

6. Procédé de fabrication et d'incorporation d'une vitre avec cadre, comportant les étapes suivantes :
- le cadre (71) est fabriqué, sous la forme d'un anneau fermé constitué par une pièce en matière plastique moulée par injection, dans laquelle :
· sur un côté du cadre (71) est moulée une première portée d'appui (73) pour appliquer totalement à plat la vitre (70),
· sur le même côté du cadre (71) est moulée une première portée de collage (75) pour y déposer un premier agent adhésif (81), cette portée étant constituée par le fond d'un évidement (74) qui divise la première portée d'appui (73) en deux sections (73, 1 ; 73,2),
· sur un des autres côtés du cadre (71) est moulée une seconde portée d'appui (76) destinée à venir s'appliquer sur une partie de véhicule (72),
· sur l'autre côté est moulée une seconde portée de collage (78) pour y déposer un second agent adhésif (82),
- le second agent adhésif (82) est déposé sur la seconde portée de collage (78) et/ou sur la zone superficielle de la pièce de véhicule (72) qui lui fera face ultérieurement,
- le cadre (71) est posé par sa seconde portée d'appui (76) sur la partie de véhicule (72) et lié à celle-ci de manière inséparable par le second agent adhésif (82),
- le premier agent adhésif (81) est déposé sur la première portée de collage (75) et/ou sur la zone superficielle de la vitre (70) qui lui fera face ultérieurement,
- la vitre (70) est posée sur la première portée d'appui (73) et liée de manière inséparable au cadre (71) par le premier agent adhésif (81).

7. Procédé selon la revendication 3 ou 4,
**caractérisé par**
les autres étapes suivantes :
- sur une face du cadre (51) située en regard de la partie de véhicule (52) est moulée une portée d'étanchéité (61) pour y déposer un élément d'étanchéité supplémentaire (62),
- avant que le cadre (51) soit posé sur la partie de véhicule (52), un élément d'étanchéité supplémentaire (62) est déposé, en étant amovible ou non, sur la portée d'étanchéité (61).

8. Procédé selon l'une des revendications 1 à 7,
**caractérisé par**
l'étape suivante :
- le cadre (11) est moulé par injection.

9. Procédé selon l'une des revendications précédentes,
**caractérisé par**
l'autre étape suivante :
- sur au moins une des faces du cadre (11, 31) situées en regard de la partie de véhicule (12) sont moulés des éléments d'étanchéité (21, 41) pour créer une étanchéité (supplémentaire) par rapport à la partie de véhicule (12),
- les éléments d'étanchéité sont constitués de préférence par des nervures périphériques d'étanchéité (21) et/ou une ou plusieurs lèvres d'étanchéité (41).
